**Europäisches Patentamt**

**European Patent Office**

**Office européen des brevets**

(19)

(11) Veröffentlichungsnummer: **0 262 421**
**B1**

(12) **EUROPÄISCHE PATENTSCHRIFT**

(45) Veröffentlichungstag der Patentschrift:
**13.06.90**

(51) Int. Cl.⁵: **G02B 15/14**

(21) Anmeldenummer: **87112649.6**

(22) Anmeldetag: **31.08.87**

(54) **Projektionsobjektiv mit veränderlicher Brennweite.**

(30) Priorität: **01.09.86 DE 3629724**
**05.01.87 DE 3700162**

(43) Veröffentlichungstag der Anmeldung:
**06.04.88 Patentblatt 88/14**

(45) Bekanntmachung des Hinweises auf die Patenterteilung:
**13.06.90 Patentblatt 90/24**

(84) Benannte Vertragsstaaten:
**AT BE CH DE ES FR GB GR IT LI LU NL SE**

(56) Entgegenhaltungen:
**AT-B- 336 918**
**AT-B- 354 131**
**CH-B- 395 579**
**DE-A- 3 043 667**
**DE-B- 2 036 285**

(73) Patentinhaber: **DOCTER-OPTIC-WETZLAR GMBH,**
**Industriegebiet Schwalbach,**
**D-6331 Schöffengrund 1(DE)**

(72) Erfinder: **Docter, Bernhard, Lutherstrasse 5,**
**D-6330 Wetzlar-Nauborn(DE)**
Erfinder: **Menzel, Ingolf, Dr.-Ing., Hoher Rain 10,**
**D-6330 Braunfels-Neukirchen(DE)**

(74) Vertreter: **Wey, Hans-Heinrich, Dipl.-Ing. et al,**
**Patentanwälte Wey & Partner Widenmayerstrasse 49,**
**D-8000 München 22(DE)**

## Beschreibung

Die Erfindung betrifft ein Projektionsobjektiv mit veränderlicher Brennweite, allgemein auch als Varioobjektive bezeichnet, mit einem Frontglied negativer Brechkraft und einem mehrlinsigen Grundobjektiv positiver Brechkraft, zwischen welchen ein in Richtung der optischen Achse verschiebbarer, mehrlinsiger Variator positiver Brechkraft angeordnet ist, dessen mittlere Linse eine negative Brechkraft aufweist.

Varioobjektive für Dia- und Filmprojektoren sind in unterschiedlichen Ausführungsformen bekanntgeworden. Sie sind im allgemeinen von den wesentlich komplexer und komplizierter aufgebauten Varioobjektiven für Aufnahmekameras abgeleitet, welche vor allem zu Gunsten der Abbildungsleistung optimiert und daher entsprechend aufwendig und infolgedessen auch teuer sind. Dagegen werden Varioobjektive für Projektionszwecke bisher üblicherweise unter dem Gesichtspunkt der Wirtschaftlichkeit ihrer Konstruktion und Fertigung so einfach wie möglich konzipiert.

So ist beispielsweise aus der DE-AS 20 36 285 ein aus nur fünf Linsen bestehendes Varioobjektiv bekanntgeworden, das aus wirtschaftlichen Gesichtspunkten mit einem Minimum an Linsen ausgestattet ist. Daher besteht der Variator dieses vorbekannten Varioobjektivs ebenso wie das Frontglied aus nur einer einzigen Linse. Ein derartiges Varioobjektiv erfüllt jedoch keineswegs die heute üblichen Ansprüche an die Farbfehlerfreiheit und die Verzeichnung.

Ein neunlinsiges Varioobjektiv der in Betracht kommen den Art, welches einen aus zwei miteinander verkitteten Linsen bestehenden Variator aufweist, ist aus der DE-OS 26 14 267 bekanntgeworden. Ein solches, nicht zuletzt auch wegen seines fünflinsigen Grundobjektivs komplex und aufwendig aufgebautes Objektiv zeichnet sich gegenüber einem Varioobjektiv mit aus nur einer einzigen Linse bestehenden Variator durch eine verbesserte chromatische Aberration aus, wobei jedoch die Verzeichnung noch einen relativ hohen Wert erreicht. Ein weiterer Nachteil dieses vorbekannten Varioobjektivs beteht in der Anwendung von zwei Kittflächen, welche einen hohen Fertigungsaufwand erfordern und dadurch das Objektiv nicht unwesentlichen verteuern.

Ein weiteres Varioobjektiv der in Betracht kommenden Art mit einem Zweilinsenvariator, einem als Einzellinse ausgebildeten Frontglied und einem aus einem Triplet bestehenden Grundobjektiv ist aus der DE-OS 26 26 696 bekanntgeworden. Bei diesem sechslinsigen Varioobjektiv sind zwar sämtliche Linsen durch Lufträume voneinander getrennt und die beiden Linsen des Variators bestehen aus bikonvexen, vorzugsweise einander gleichen Einzellinsen. Zwecks Senkung der Fertigungskosten bestehen bei diesem Objektiv die Frontlinse und der Variator nicht aus optischem Glas, sondern aus Kunststoff. Daher kann es nicht verwundern, daß dieses bekannte Objektiv insbesondere in den Weitwinkel- und Teleeinstellungen deutlich sichtbare Verzeichnungen erkennen läßt.

Entsprechend aufwendige Varioobjektive mit dreizehn, sechzehn und vierzehn Linsen und einer Vielzahl von Kittflächen bzw. mit zehn Linsen und zwei Kittflächen sind aus der DE-PS 30 26 931 bzw. der DD-PS 51 130 bekanntgeworden. Die Verzeichnung bei den meisten dieser bekannten Varioobjektive für Projektionszwecke weist jeweils in der Weitwinkeleinstellung kissenförmige und in der Teleeinstellung tonnenförmig verlaufende Linien auf. Die Werte für die Verzeichnungen betragen durchaus bis zu ±5 % und sind bei der Projektion deutlich sichtbar. Solche Verzeichnungen werden vor allem bei der Überblend-Projektion, der Parallelprojektion oder der Multivision als störend empfunden.

Angesichts dieses Standes der Technik liegt der Erfindung die Aufgabe zugrunde, ein für Projektionszwecke geeignetes Varioobjektiv zu schaffen, das sich bei insgesamt guten Abbildungseigenschaften und Farbfehlerfreiheit durch eine drastische Verringerung der Werte für die Verzeichnung auszeichnet, und welches sich einfach und wirtschaftlich fertigen läßt.

Zur Lösung dieser Aufgabe wird vorgeschlagen, die in den Patentansprüchen 1 und 2 angegebenen Merkmale vorzusehen.

Ein bevorzugtes erstes Ausführungsbeispiel eines erfindungsgemäß ausgebildeten Varioobjektivs weist somit bei konstanter, relativ geringer Baulänge eine Brennweite von 70 bis 120 mm und eine Lichtstärke von im wesentlichen 1:3,4 auf. Die optischen Daten eines solchen Objektivs gehen aus der Tabelle des Anspruchs 2 hervor. Dieses Varioobjektiv wird vorzugsweise bei der Heimprojektion eingesetzt und weist in seinen Weitwinkel- und Teleeinstellungen eine Verzeichnung von weniger als ±1,5 % auf.

Ein bevorzugtes zweites Ausführungsbeispiel eines erfindungsgemäß ausgebildeten Varioobjektivs weist eine Brennweite von 85 bis 145 mm auf und findet vorzugs weise für Großraum-Projektionszwecke Anwendung. In seinen Weitwinkel- und Teleeinstellungen weist dieses Varioobjektiv eine Verzeichnung von weniger als ±1 % auf.

Für die beiden vorgenannten Ausführungsbeispiele ist der im Vergleich zu den zum Stand der Technik gehörenden Objektive der drastisch gesenkte Wert für die Verzeichnung charakterisdtisch. Dieser sehr niedrige Verzeichnungswert basiert insbesondere auf der Anwendung eines aus drei freistehenden Linsen bestehenden Variators ohne jede Kittfläche. Hierdurch wird eine sehr gute Bildqualität gewährleistet, wobei vor allem Kontrast und Auflösung über den gesamten Brennweitenbereich hervorragend sind. Die nur sehr geringfügige Verzeichnung ist kaum noch sichtbar, so daß sich dieses Objektiv speziell für die Überblendungsprojektion, die Parallelprojektion und die Multivision eignet.

Ein weiterer, vor allem für die Großserienfertigung entscheidender Vorteil der erfindungsgemäß ausgebildeten Varioobjektive besteht darin, daß, wie am Beispiel der beiden bevorzugten Ausführungsbeispiele verdeutlicht ist, ein und derselbe Variator für Objektive unterschiedlicher Brennweitenbereiche eingesetzt werden kann. Der Vorteil eines solchen universell verwendbaren Variators besteht dabei fertigungsseitig insbesondere darin, daß nicht eine Vielzahl von Werkzeugsätzen, sondern lediglich ein einziger Werkzeugsatz für diese benötigt wird.

In den Figuren 1 bis 3 der Zeichnung ist ein bevorzugtes Ausführungsbeispiel eines Varioobjektivs schematisch dargestellt, welches nachstehend näher erläutert ist. Es zeigen:

Fig. 1 das erfindungsgemäß ausgebildete Varioobjektiv in der Weitwinkeleinstellung des Variators,
Fig. 2 das Varioobjektiv nach Fig. 1 in seiner Normaleinstellung, und
Fig. 3 das Varioobjektiv nach Fig. 1, bei welchem sich der Variator in der Teleeinstellung befindet.

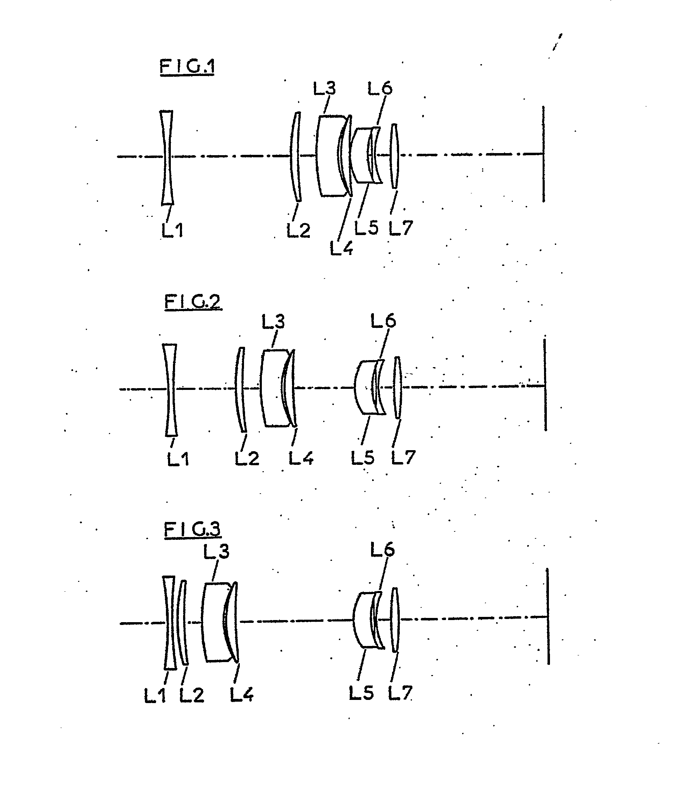

Das Varioobjektiv nach den Figuren 1 bis 3 besteht aus insgesamt sieben Linsen, von welchen das Frontglied F mit negativer Brechkraft aus einer einzigen Linse L1 besteht. Der Variator V wie auch das Grundobjektiv G wird jeweils von den drei Linsen L2, L3, L4 bzw. L5, L6 und L7 gebildet. Sämtliche Linsen sind freistehend angeordnet, d.h., daß zwischen sämtlichen Linsen Lufträume vorhanden sind. Auch sind keine Linsen miteinander verkittet.

Das aus einer negativen bikonkaven Linse bestehende Frontglied F weist eine stärker gekrümmte konkave Fläche $r_1$ auf, welche dem Bild zugekehrt ist. Der aus den drei Linsen L2, L3 und L4 bestehende Variator V ist in dem relativ großen Luftraum zwischen der Frontlinse L1 und der vorderen Linse L5 des Grundobjektivs G axial verschiebbar.

Das bildseitig angeordnete Grundobjektiv G besteht ebenfalls wieder aus drei Linsen L5, L6 und L7, die gleichfalls freistehend angeordnet sind, so daß sich zwischen ihnen Lufträume befinden. Auch weist keine dieser Linsen eine Kittfläche auf.

Die Krümmungsradien der Linsen $r_1$-$r_{14}$ wie auch deren axiale Dicken $d_1$-$d_7$ und die axialen Lufträume $l_1$-$l_6$ zwischen den Linsen L1-L7 sowie die Brechungsindizes der einzelnen Linsen und deren Abbésche Zahl bzw. die Glassorte, aus welchen sie bestehen, gehen aus den Tabellen der Ansprüche 1 und 2 hervor.

Das erfindungsgemäß ausgebildete Varioobjektiv nach Anspruch 1 hat einen kontinuierlich veränderbaren Brennweitenbereich zwischen 70 und 120 mm, wobei das Öffnungsverhältnis im wesentlichen gleich bleibt und ca. 1:3,4 beträgt; es zeichnet sich durch eine extrem kompakte Bauweise aus. So beträgt die Baulänge dieses Objektivs von der Vorderfläche $r_1$ der Linse L1 bis zur Rückfläche $r_{14}$ der Linse L7 nur 98,642 mm.

Bei dem Varioobjektiv mit den Daten nach Anspruch 2 liegt der kontinuierlich variierbare Brennweitenbereich zwischen 85 und 145 mm, wobei das Öffnungsverhältnis von ca. 1:4 im wesentlichen konstant bleibt. Auch dieses Varioobjektiv zeichnet sich durch seine gedrängte Bauweise aus; die Baulänge beträgt hier auch nur 101,994 mm.

## Patentansprüche

1. Projektionsobjektiv mit veränderlicher Brennweite, mit einem aus einer einzigen Linse (L1) negativer Brechkraft bestehenden Frontglied (F) und einem dreilinsigen Grundobjektiv (G) positiver Brechkraft, zwischen welchen ein in Richtung der optischen Achse verschiebbarer, mehrlinsiger Variator (V) positiver Brechkraft angeordnet ist, dadurch gekennzeichnet, daß der Variator (V) gleichfalls aus einem Triplet (L2, L3, L4) besteht, und daß die nachstehenden Konstruktionsdaten eines Objektivs mit einem Brennweitenbereich von 70-120 mm bzw. einer Brennweitenveränderung von 1:1,714 und einem Öffnungsverhältnis von im wesentlichen 1:3,4 eingehalten sind:

|  | | | | $n_d$ | $\gamma_d$ |
|---|---|---|---|---|---|
| L1 | $r_1$ | −141,250 | | | |
| | | | $d_1 = 2,0000$ | 1,487 | 70,41 |
| | $r_2$ | 262,270 | | | |
| | | | $l_1 = 51,000 \text{ bis } 2,139$ | | |
| L2 | $r_3$ | 53,858 | | | |
| | | | $d_2 = 3,500$ | 1,713 | 53,83 |
| | $r_4$ | 205,350 | | | |
| | | | $l_2 = 7,000$ | | |
| L3 | $r_5$ | 57,876 | | | |
| | | | $d_3 = 9,600$ | 1,805 | 25,43 |
| | $r_6$ | 32,313 | | | |
| | | | $l_3 = 1,105$ | | |
| L4 | $r_7$ | 45,643 | | | |
| | | | $d_4 = 3,200$ | 1,713 | 53,83 |
| | $r_8$ | 117,150 | | | |
| | | | $l_4 = 0,700 \text{ bis } 49,561$ | | |
| L5 | $r_9$ | 24,582 | | | |
| | | | $d_5 = 7,600$ | 1,744 | 54,77 |
| | $r_{10}$ | 34,227 | | | |
| | | | $l_5 = 1,837$ | | |
| L6 | $r_{11}$ | −658,790 | | | |
| | | | $d_6 = 1,200$ | 1,773 | 32,21 |
| | $r_{12}$ | 26,799 | | | |
| | | | $l_6 = 6,400$ | | |
| L7 | $r_{13}$ | 81,752 | | | |
| | | | $d_7 = 3,500$ | 1,744 | 54,77 |
| | $r_{14}$ | −81,752 | | | |

wobei r die Krümmungsradien der einzelnen Linsen, d deren axiale Dicken, l die Luftabstände zwischen den Linsen, nd die Brechungsindizes und $\gamma$ die Abbéschen Zahlen der Linsen sind.

2. Projektionsobjektiv mit veränderlicher Brennweite, mit einem aus einer einzigen Linse (L1) negativer Brechkraft bestehenden Frontglied (F) und einem dreilinsigen Grundobjektiv (G) positiver Brechkraft, zwischen welchen ein in Richtung der optischen Achse verschiebbarer, mehrlinsiger Variator (V) positiver Brechkraft angeordnet ist, dadurch gekennzeichnet, daß der Variator (V) gleichfalls aus einem Triplet (L2, L3, L4) besteht, und daß die nachstehenden Konstruktionsdaten eines Objektivs mit einem Brennweitenbereich von 85–145 mm bzw. einer Brennweitenveränderung von 1:1,706 und einem Öffnungsverhältnis von im wesentlichen 1:4 eingehalten sind:

|  | | | $n_d$ | $\gamma d$ |
|---|---|---|---|---|
| $r_1$ | −149,620 | | | |
| L1 | | $d_1 = 2,000$ | 1,487 | 70,41 |
| $r_2$ | 237,140 | | | |
| | | $l_2 = 51,000$ bis 2,140 | | |
| $r_3$ | 53,858 | | | |
| L2 | | $d_3 = 3,500$ | 1,713 | 53,83 |
| $r_4$ | 205,350 | | | |
| | | $l_4 = 7,000$ | | |
| $r_5$ | 57,876 | | | |
| L3 | | $d_5 = 9,600$ | 1,805 | 25,43 |
| $r_6$ | 32,313 | | | |
| | | $l_6 = 1,105$ | | |
| $r_7$ | 45,643 | | | |
| L4 | | $d_7 = 3,200$ | 1,713 | 53,83 |
| $r_8$ | 117,150 | | | |
| | | $l_8 = 0,700$ bis 49,560 | | |
| $r_9$ | 22,876 | | | |
| L5 | | $d_9 = 6,000$ | 1,744 | 54,77 |
| $r_{10}$ | 33,256 | | | |
| | | $l_{10} = 1,289$ | | |
| $r_{11}$ | 113,830 | | | |
| L6 | | $d_{11} = 1,200$ | 1,648 | 33,05 |
| $r_{12}$ | 22,549 | | | |
| | | $l_{12} = 12,400$ | | |
| $r_{13}$ | 73,388 | | | |
| L7 | | $d_{13} = 3,000$ | 1,744 | 54,77 |
| $r_{14}$ | −570,490 | | | |

wobei r die Krümmungsradien der einzelnen Linsen, d deren axiale Dicken, I die Luftabstände zwischen den Linsen, nd die Brechungsindizes und γ die Abbéschen Zahlen der Linsen sind.

## Claims

1. Projection objective with variable focal length, having a front member (F) comprising a single lens (L1) of negative refractive power, and a triple-lensed basic objective (G) of positive refractive power, between which there is arranged a multi-lensed variator (V) of positive refractive power movable in the direction of the optical axis, characterised in that the variator (V) also comprises a triplet (L2, L3, L4), and in that the following construction data of an objective with a focal length range of 70–120 mm or a focal length variation of 1:1.714 and an opening ratio of substantially 1:3.4 are adhered to:

|  |  |  |  |  | $n_d$ | $\gamma_d$ |
|---|---|---|---|---|---|---|
| L1 | $r_1$ | −141,250 | | | | |
| | | | $d_1 = 2,0000$ | | 1,487 | 70,41 |
| | $r_2$ | 262,270 | | | | |
| | | | $l_1 = 51,000$ bis 2,139 | | | |
| L2 | $r_3$ | 53,858 | | | | |
| | | | $d_2 = 3,500$ | | 1,713 | 53,83 |
| | $r_4$ | 205,350 | | | | |
| | | | $l_2 = 7,000$ | | | |
| L3 | $r_5$ | 57,876 | | | | |
| | | | $d_3 = 9,600$ | | 1,805 | 25,43 |
| | $r_6$ | 32,313 | | | | |
| | | | $l_3 = 1,105$ | | | |
| L4 | $r_7$ | 45,643 | | | | |
| | | | $d_4 = 3,200$ | | 1,713 | 53,83 |
| | $r_8$ | 117,150 | | | | |
| | | | $l_4 = 0,700$ bis 49,561 | | | |
| L5 | $r_9$ | 24,582 | | | | |
| | | | $d_5 = 7,600$ | | 1,744 | 54,77 |
| | $r_{10}$ | 34,227 | | | | |
| | | | $l_5 = 1,837$ | | | |
| L6 | $r_{11}$ | −658,790 | | | | |
| | | | $d_6 = 1,200$ | | 1,773 | 32,21 |
| | $r_{12}$ | 26,799 | | | | |
| | | | $l_6 = 6,400$ | | | |
| L7 | $r_{13}$ | 81,752 | | | | |
| | | | $d_7 = 3,500$ | | 1,744 | 54,77 |
| | $r_{14}$ | −81,752 | | | | |

wherein r is the radius of curvature of the individual lenses, d their axial thickness, l the air gaps between the lenses, nd the refractive indices and $\gamma$ the Abbe numbers of the lenses.

2. Projection objective with variable focal length, having a front member (F) comprising a single lens (L1) of negative refractive power, and a triple-lensed basic objective (G) of positive refractive power, between which there is arranged a multi-lensed variator (V) of positive refractive power movable in the direction of the optical axis, characterised in that the variator (V) also comprises a triplet (L2, L3, L4) and in that the following construction data of an objective with a focal length range of 85 − 145 mm or a focal length variation of 1:1.706 and an opening ratio of substantially 1:4 are adhered to:

6

|  |  |  |  | $n_d$ | $\gamma d$ |
|---|---|---|---|---|---|
|  | $r_1$ | −149,620 |  |  |  |
| L1 |  |  | $d_1 =$ 2,000 | 1,487 | 70,41 |
|  | $r_2$ | 237,140 |  |  |  |
|  |  |  | $l_2 =$ 51,000 bis 2,140 |  |  |
|  | $r_3$ | 53,858 |  |  |  |
| L2 |  |  | $d_3 =$ 3,500 | 1,713 | 53,83 |
|  | $r_4$ | 205,350 |  |  |  |
|  |  |  | $l_4 =$ 7,000 |  |  |
|  | $r_5$ | 57,876 |  |  |  |
| L3 |  |  | $d_5 =$ 9,600 | 1,805 | 25,43 |
|  | $r_6$ | 32,313 |  |  |  |
|  |  |  | $l_6 =$ 1,105 |  |  |
|  | $r_7$ | 45,643 |  |  |  |
| L4 |  |  | $d_7 =$ 3,200 | 1,713 | 53,83 |
|  | $r_8$ | 117,150 |  |  |  |
|  |  |  | $l_8 =$ 0,700 bis 49,560 |  |  |
|  | $r_9$ | 22,876 |  |  |  |
| L5 |  |  | $d_9 =$ 6,000 | 1,744 | 54,77 |
|  | $r_{10}$ | 33,256 |  |  |  |
|  |  |  | $l_{10} =$ 1,289 |  |  |
|  | $r_{11}$ | 113,830 |  |  |  |
| L6 |  |  | $d_{11} =$ 1,200 | 1,648 | 33,05 |
|  | $r_{12}$ | 22,549 |  |  |  |
|  |  |  | $l_{12} =$ 12,400 |  |  |
|  | $r_{13}$ | 73,388 |  |  |  |
| L7 |  |  | $d_{13} =$ 3,000 | 1,744 | 54,77 |
|  | $r_{14}$ | −570,490 |  |  |  |

wherein r is the radius of curvature of the individual lenses, d their axial thickness, l the air gaps between the lenses, nd the refractive indices and $\gamma$ the Abbe numbers of the lenses.

## Revendications

1. Objectif à focale variable pour projection, comportant un élément avant (F) constitué d'une seule lentille (L1) à convergence négative et un objectif de base (G) à trois lentilles et à convergence positive, entre lesquels est disposé un élément de variation de focale (V) à plusieurs lentilles, à convergence positive et mobile suivant la direction de l'axe optique, caractérisé en ce que l'élément de variation de focale (V) est aussi constitué d'un triplet (L2, L3, L4) et en ce que les données de construction d'un objectif qui suivent sont respectées avec un domaine de réglage de distance focale de 70 à 120 mm, ou une variation de distance focale de 1:1,714, et une ouverture relative d'essentiellement 1:3,4:

|  |  |  |  | $n_d$ | $\gamma_d$ |
|---|---|---|---|---|---|
| L1 | $r_1$ | −141,250 |  |  |  |
|  |  |  | $d_1 = 2,0000$ | 1,487 | 70,41 |
|  | $r_2$ | 262,270 |  |  |  |
|  |  |  | $l_1 = 51,000$ bis 2,139 |  |  |
| L2 | $r_3$ | 53,858 |  |  |  |
|  |  |  | $d_2 = 3,500$ | 1,713 | 53,83 |
|  | $r_4$ | 205,350 |  |  |  |
|  |  |  | $l_2 = 7,000$ |  |  |
| L3 | $r_5$ | 57,876 |  |  |  |
|  |  |  | $d_3 = 9,600$ | 1,805 | 25,43 |
|  | $r_6$ | 32,313 |  |  |  |
|  |  |  | $l_3 = 1,105$ |  |  |
| L4 | $r_7$ | 45,643 |  |  |  |
|  |  |  | $d_4 = 3,200$ | 1,713 | 53,83 |
|  | $r_8$ | 117,150 |  |  |  |
|  |  |  | $l_4 = 0,700$ bis 49,561 |  |  |
| L5 | $r_9$ | 24,582 |  |  |  |
|  |  |  | $d_5 = 7,600$ | 1,744 | 54,77 |
|  | $r_{10}$ | 34,227 |  |  |  |
|  |  |  | $l_5 = 1,837$ |  |  |
| L6 | $r_{11}$ | −658,790 |  |  |  |
|  |  |  | $d_6 = 1,200$ | 1,773 | 32,21 |
|  | $r_{12}$ | 26,799 |  |  |  |
|  |  |  | $l_6 = 6,400$ |  |  |
| L7 | $r_{13}$ | 81,752 |  |  |  |
|  |  |  | $d_7 = 3,500$ | 1,744 | 54,77 |
|  | $r_{14}$ | −81,752 |  |  |  |

les r étant les rayons de courbure des différentes lentilles, les d leurs épaisseurs axiales, les l les distance libres séparant les lentille, les $n_d$ les indices de réfraction des lentilles et les $\gamma$ les coefficients d'Abbe.

2. Objectif à focale variable pour projection, comportant un élément avant (F) constitué d'une seule lentille (L1) à convergence négative et un objectif de base (G) à trois lentilles et à convergence positive, entre lesquels est disposé un élément de variation de focale (V) à plusieurs lentilles, à convergence positive et mobile suivant la direction de l'axe optique, caractérisé en ce que l'élément de variation de focale (V) est aussi constitué d'un triplet (L2, L3, L4) et en ce que les données de construction d'un objectif qui suivent sont respectées avec un domaine de réglage de distance focale de 85 à 145 mm, ou une variation de distance focale de 1:1,706, et une ouverture relative d'essentiellement 1:4:

|    |        |          |                        | $n_d$ | $\gamma d$ |
|----|--------|----------|------------------------|-------|------------|
|    | $r_1$  | −149,620 |                        |       |            |
| L1 |        |          | $d_1 = 2,000$          | 1,487 | 70,41      |
|    | $r_2$  | 237,140  |                        |       |            |
|    |        |          | $l_2 = 51,000$ bis 2,140 |     |            |
|    | $r_3$  | 53,858   |                        |       |            |
| L2 |        |          | $d_3 = 3,500$          | 1,713 | 53,83      |
|    | $r_4$  | 205,350  |                        |       |            |
|    |        |          | $l_4 = 7,000$          |       |            |
|    | $r_5$  | 57,876   |                        |       |            |
| L3 |        |          | $d_5 = 9,600$          | 1,805 | 25,43      |
|    | $r_6$  | 32,313   |                        |       |            |
|    |        |          | $l_6 = 1,105$          |       |            |
|    | $r_7$  | 45,643   |                        |       |            |
| L4 |        |          | $d_7 = 3,200$          | 1,713 | 53,83      |
|    | $r_8$  | 117,150  |                        |       |            |
|    |        |          | $l_8 = 0,700$ bis 49,560 |     |            |
|    | $r_9$  | 22,876   |                        |       |            |
| L5 |        |          | $d_9 = 6,000$          | 1,744 | 54,77      |
|    | $r_{10}$ | 33,256 |                        |       |            |
|    |        |          | $l_{10} = 1,289$       |       |            |
|    | $r_{11}$ | 113,830 |                       |       |            |
| L6 |        |          | $d_{11} = 1,200$       | 1,648 | 33,05      |
|    | $r_{12}$ | 22,549 |                        |       |            |
|    |        |          | $l_{12} = 12,400$      |       |            |
|    | $r_{13}$ | 73,388 |                        |       |            |
| L7 |        |          | $d_{13} = 3,000$       | 1,744 | 54,77      |
|    | $r_{14}$ | −570,490 |                      |       |            |

les r étant les rayons de courbure des différentes lentilles, les d leurs épaisseurs axiales, les l les distances libres séparant les lentilles, les $n_d$ les indices de réfraction des lentilles et les $\gamma$ les coefficients d'Abbe.

**EP 0 262 421 B1**

FIG.1

FIG.2

FIG.3